# EUROPÄISCHE PATENTSCHRIFT

(11) **EP 1 273 507 B1**
(45) Veröffentlichungstag und Bekanntmachung des Hinweises auf die Patenterteilung: **04.05.2005**
(21) Anmeldenummer: 02013123.1
(22) Anmeldetag: 14.06.2002
(51) Int. Cl.: B62K 23/04

(54) **Drehgriffschalter**
Grip for a bicycle shift control device
Poignée tournante pour un organe de commande de bicyclette

(30) Priorität: 02.07.2001 DE 10132010
(43) Veröffentlichungstag der Anmeldung: 08.01.2003
(73) Patentinhaber: SRAM Deutschland GmbH, 97404 Schweinfurt (DE)
(72) Erfinder: Blaschke, Georg, 97505 Geldersheim (DE)

(56) Entgegenhaltungen:
- EP-A- 0 636 539
- EP-A- 0 686 552
- EP-A- 0 759 393
- DE-A- 19 915 333

## Beschreibung

Die Erfindung betrifft einen Drehgriffschalter zur Anordnung an einem Fahrradlenker gemäß dem Oberbegriff des Patentanspruchs 1.

Drehgriffschalter der in Rede stehenden Art sind in weiter Verbreitung an Fahrrädern nahezu aller Typen und Qualitätsklassen zu finden. Solche Drehgriffschalter haben die Aufgabe, dem Fahrradfahrer auf einfache, sichere und ergonomische Art und Weise die manuelle Wahl und Kontrolle der gewünschten Übersetzungsstufe des Fahrradgetriebes zu ermöglichen. Gattungsgemäße Drehgriffschalter kommen dabei sowohl bei Fahrrädern mit Getriebenaben als auch bei Fahrrädern mit Kettenschaltungen zum Einsatz, wobei sie im allgemeinen ein in der Nähe des Lenkerendes am Lenkerrohr befestigbares Gehäuseelement sowie ein um die Achse des Lenkerrohrendes drehbares Betätigungselement umfassen. Dabei sind sowohl Gehäuseelement als auch Betätigungselement im allgemeinen das Lenkerrohr ringartig umgreifend angeordnet. Das Betätigungselement ist im allgemeinen mit einer griffigen, beispielsweise aus einem Elastomerwerkstoff hergestellten Oberfläche versehen und bildet meist einen Teil eines der beiden am Fahrradlenker angeordneten Lenkergriffe. Ebenso gut kann jedoch auch der gesamte Lenkergriff durch das Betätigungselement des Drehgriffschalters gebildet werden.

In jedem Fall ist es jedoch insbesondere aus Sicherheitsgründen notwendig, dass das Betätigungselement gegen unerwünschte axiale Bewegungen entlang der Lenkerrohrachse gesichert wird. Ein nicht oder nur unzureichend gegen axiale Bewegungen gesichertes Betätigungselement eines Drehgriffschalters könnte sonst, infolge der beim Fahrradfahren auftretenden und über die Lenkergriffe in den Fahrradlenker einzuleitenden Armkräfte, abrutschen und sich vom Lenkerende lösen, wodurch gefährliche Stürze herbeigeführt werden können. Somit kommt einer wirksamen und belastbaren Axialsicherung des Betätigungselements am Fahrradlenker bzw. am Gehäuseelement des Drehgriffschalters eine zentrale Bedeutung zu.

Aus der DE 199 15 333 A1 (berrachtet als nächstliegender Stand der Technik) ist ein Drehgriffschalter für Fahrräder bekannt mit den merkmalen des Oberbegriffs des ersten Anspruchs, bei dem die Axialsicherung des Betätigungselements relativ zum Gehäuseelement des Drehgriffschalters anhand eines zusätzlichen, am äußeren Ende des Drehgriffschalters angeordneten ringförmigen Verschlussstücks erfolgt, das mit einem bajonettartigen bzw. nach Art einer Schnappverbindung ausgebildeten Verschluss versehen ist. Herstellung und Montage des zusätzlich zum Gehäuseelement und zum Betätigungselement des Drehgriffschalters vorzusehenden Verschlussstücks und der ebenfalls notwendigen, mit dem Gehäuseelement zu verbindenden, zum Verschlussstück formkomplementären Gegenstücke ist jedoch kosten- und zeitaufwändig, und darüber hinaus sind die Werkzeuge zur Herstellung der Einzelteile kompliziert und daher teuer. Zudem kann es vorkommen, dass das Verschlussstück verloren geht bzw. bei Montage oder Zusammenbau des Drehgriffschalters vergessen wird, wodurch ein zwar zunächst funktionsfähiger Drehgriffschalter erhalten wird, der jedoch aufgrund der Gefahr des Abrutschens des Betätigungselements vom Lenkerende am Fahrrad ein gefährliches Sicherheitsrisiko darstellt.

Es ist daher Aufgabe der vorliegenden Erfindung, einen Drehgriffschalter zu schaffen, bei dem bereits mit der Montage des Betätigungselements am Gehäuseelement stets auch die notwendige Axialsicherung des Betätigungselements automatisch herbeigeführt wird und bei dem insbesondere keine zusätzlichen Teile, wie beispielsweise Verschlussstücke, zur Herstellung der Axialsicherung des Betätigungselements am Gehäuseelement notwendig sind.

Diese Aufgabe wird durch einen Drehgriffschalter nach der Lehre des Patentanspruchs 1 gelöst.

Vorteilhafte Ausführungsformen der Erfindung sind Gegenstand der Unteransprüche.

Der Drehgriffschalter gemäß der vorliegenden Erfindung weist zunächst und in an sich bekannter Weise ein das Lenkerrohrende ringartig umgreifend am Lenkerrohr festlegbares Gehäuseelement, sowie ein um die Lenkerrohrachse winkelbegrenzt drehbares Betätigungselement auf. Dabei ist das Betätigungselement in an sich ebenfalls bekannter Weise mittels einer Rastelemente umfassenden Schnappeinrichtung axial am Gehäuseelement festlegbar. Ein erstes Rastelement der Schnappeinrichtung ist dabei mit dem Gehäuseelement des Drehgriffschalters verbunden bzw. am Gehäuseelement angeordnet. Im Gegensatz zu den aus dem Stand der Technik bekannten Drehgriffschaltern bildet jedoch das zweite, zum ersten Rastelement formkomplementär ausgebildete Rastelement kein zusätzliches Einzelteil, sondern ist unmittelbar am Betätigungselement selbst angeordnet. Dadurch entfällt die bei gattungsgemäßen Drehgriffschaltern bisher gegebene Notwendigkeit, ein zusätzliches Verschlussstück vorsehen zu müssen, an dem das zweite, zum ersten Rastelement formkomplementäre Rastelement anzuordnen war. Durch den erfindungsgemäß ermöglichten Wegfall des zusätzlichen Verschlussstücks werden Werkzeug-, Produktions- und Montagekosten eingespart. Zusätzlich entfällt damit die bei gattungsgemäßen Drehgriffschaltern bisher vorhandene und die Fahrsicherheit beeinträchtigende Fehlerquelle des verlierbaren bzw. bei der Montage vergessenen Verschlussstücks.

Gemäß einer bevorzugten Ausführungsform der Erfindung ist sowohl das erste als auch das zweite Rastelement auf einem lenkernahen Radius, beispielsweise im Innenbereich des Drehgriffschalters angeordnet. Die lenkernahe Anordnung der Rastelemente der Schnappeinrichtung führt zu erhöhter Eigensteifigkeit der Rastelemente insbesondere in radialer Richtung, wodurch die beim Fahrradfahren auftretenden beträchtlichen Hand- und Armkräfte mit größerer Sicherheit in den Fahrradlenker eingeleitet werden können, ohne dass die Gefahr eines ungewollten Lösens der Axialsicherung des Betätigungselements besteht. Durch geeignete Anordnung der Rastelemente der Schnappeinrichtung auf unmittelbar an die Lenkeroberfläche angrenzenden Radien bzw. im Innenbereich des Drehgriffschalters lässt sich sogar erreichen, dass die durch die Schnappeinrichtung gebildete Verbindung von Betätigungselement und Gehäuseelement überhaupt nur dann gelöst werden kann, wenn der Drehgriffschalter nicht auf dem Fahrradlenker montiert ist.

Gemäß einer bevorzugten Ausführungsform der Erfindung weist eines der Rastelemente der Schnappeinrichtung eine im Radialschnitt im wesentlichen hakenartig ausgebildete Kontur auf, während das andere Rastelement im Radialschnitt eine zum hakenartig ausgebildeten Rastelement formkomplementäre Hinterschneidung bildet. Gemäß einer besonders bevorzugten Ausführungsform ist dabei vorgesehen, dass erstes und zweites Rastelement sich in Umfangsrichtung jeweils entlang von Kreissegmenten erstrecken, wobei jedoch die Segmentwinkel der Kreissegmente unterschiedlich groß sind. Eine dergestalt ausgebildete Schnappeinrichtung, deren Rastelemente sich in Umfangsrichtung entlang unterschiedlich großer Kreissegmente erstrecken, ist vorteilhaft insofern, als sich auf diese Weise durch die Schnappeinrichtung des Drehgriffschalters, neben der gewünschten Axialsicherung des Betätigungselements, gleichzeitig auch die Aufgabe der Drehwinkelbegrenzung des Betätigungselements erfüllen lässt, wodurch sich der Aufbau des Drehgriffschalters weiter wesentlich vereinfachen lässt und wodurch somit weitere Kosten eingespart werden können.

Um den Gesamtdrehwinkel des Betätigungselements nun auf ein bestimmtes, gewünschtes Winkelmaß zu begrenzen, kann die Winkeldifferenz der Kreissegmentwinkel der beiden Rastelemente, wie dies gemäß einer besonders bevorzugten Ausführungsform der Erfindung vorgesehen ist, so gewählt werden, dass diese Winkeldifferenz dem gewünschten Gesamtdrehwinkel des Betätigungselements entspricht.

Für die Erfindung ist es unwesentlich, ob das hakenartig ausgebildete Rastelement am Gehäuseelement oder am Betätigungselement des Drehgriffschalters angeordnet ist. Gemäß einer bevorzugten Ausführungsform der Erfindung jedoch ist das hakenartige Rastelement am Betätigungselement angeordnet, was zur Anordnung des die Hinterschneidung bildenden anderen Rastelements am Gehäuseelement führt. Die Anordnung des hakenartigen Rastelements am Betätigungselement besitzt Vorteile insbesondere bezüglich Werkzeuggestaltung und Entformbarkeit, ist jedoch auch im Hinblick auf die optimale Steifigkeit von Axialsicherung und Drehwinkelbegrenzung der Schnappeinrichtung von Vorteil.

Um die Montage bzw. den Zusammenbau des Drehgriffschalters zu erleichtern und um weiterhin mögliche Fehlerquellen bereits bei der Montage des Betätigungselements zu minimieren, ist es gemäß einer weiteren, bevorzugten Ausführungsform der Erfindung vorgesehen, dass der Drehgriffschalter eine zum hakenartigen Rastelement formkomplementäre Einführschräge aufweist. Die Einführschräge erstreckt sich dabei in Umfangsrichtung entlang eines Kreissegments, dessen Segmentwinkel dem Segmentwinkel des hakenartigen Rastelements entspricht. Diese Einführschräge dient beim Aufschieben des Betätigungselements auf das Gehäuseelement zum Ausheben des hakenartigen Rastelements aus seiner Ruhestellung, wodurch das Einführen des hakenartigen Rastelements in die Hinterschneidung des anderen Rastelements erleichtert wird. Der dem radialen Segmentwinkel des hakenartigen Rastelements entsprechende Segmentwinkel der Einführschräge ist insofern vorteilhaft, als sich auf diese Weise Betätigungselement und Gehäuseelement des Drehgriffschalters in lediglich einer exakt definierten Relativwinkelstellung zusammenbauen lassen, wodurch Fehler bei der Montage des Drehgriffschalters vermieden werden können.

Gemäß einer weiteren Ausführungsform der vorliegenden Erfindung wird der Vorsprung des hakenartigen Rastelements durch ein separat montierbares Element, beispielsweise durch eine Schraube oder durch einen einpressbaren Stift gebildet. Ein dergestalt ausgebildetes hakenartiges Rastelement führt insbesondere zu Vereinfachungen bei der Urformung von Gehäuseelement bzw. Betätigungselement, wodurch sich weitere Kosteneinsparungen erzielten lassen.

Im folgenden wird die Erfindung anhand lediglich ein Ausführungsbeispiel darstellender Zeichnungen näher erläutert. Es zeigt
- Fig. 1: in schematischer, perspektivischer Ansicht ein Gehäuseelement eines Drehgriffschalters;
- Fig. 2: in einer Fig. 1 entsprechenden Darstellung das Betätigungselement desselben Drehgriffschalters; und
- Fig. 3: den Drehgriffschalter, bestehend aus Gehäuseelement und Betätigungselement gemäß Fig. 1 bzw. 2, in schematischer Darstellung im Axialschnitt.

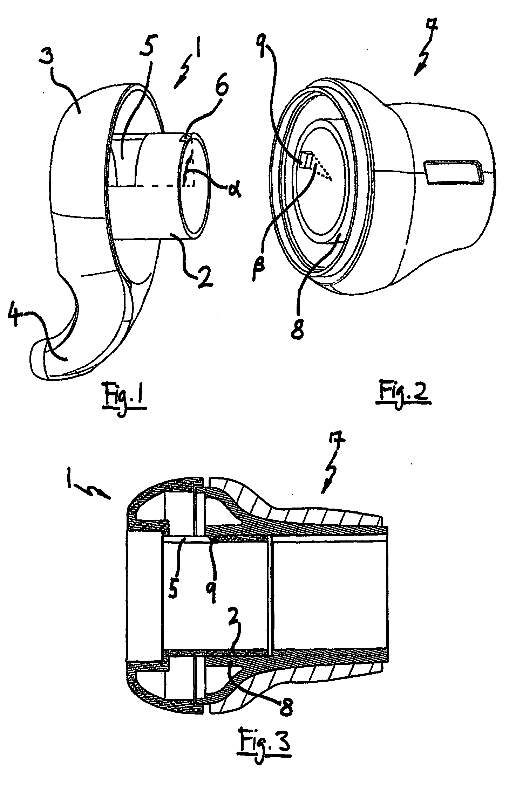

Das in Fig. 1 perspektivisch dargestellte Gehäuseelement 1 eines Drehgriffschalters besitzt einen zylinderartig ausgebildeten Schaftbereich 2, einen Gehäusedekkelbereich 3 sowie einen Gehäusefortsatz 4 zur Aufnahme eines nicht dargestellten Seilzugs. Der Innendurchmesser des Schaftbereichs 2 ist dabei geringfügig größer gehalten als der Außendurchmesser des Fahrradlenkers, so dass das Gehäuseelement 1 auf das Ende des Fahrradlenkers aufgeschoben werden kann, wonach es sich mittels einer nicht gezeichneten Schraub- bzw. Klemmeinrichtung fest mit dem Fahrradlenker verbinden lässt. Das Gehäuseelement 1 des Drehgriffschalters umfasst weiterhin eine durchbruchartige Ausnehmung 5, die eines der beiden Rastelemente bildet, aus denen sich die Schnappeinrichtung zur Verbindung von Betätigungselement 7 und Gehäuseelement 1 des Drehgriffschalters zusammensetzt. Weiterhin umfasst das Gehäuseelement 1 eine Einführschräge 6 zum Ausheben des gemäß Fig. 2 am Betätigungselement 7 angeordneten Rastelements 9.

Fig. 2 zeigt in schematischer, seitlicher, perspektivischer Ansicht ein Betätigungselement 7 eines Drehgriffschalters. Das Betätigungselement 7 weist einen zylinderförmigen Innenbereich 8 auf, dessen Innendurchmesser dem Außendurchmesser des zylinderförmigen Schaftbereichs 2 des Gehäuseelements 1 entspricht, so dass der zylinderförmige Innenbereich 8 des Betätigungselements 7 auf den zylinderförmigen Schaftbereich 2 des Gehäuseelements 1 aufgeschoben werden kann, wodurch eine drehbewegliche Gleitlagerung zwischen Betätigungselement 7 und Gehäuseelement 1 gebildet wird. Ferner weist das Betätigungselement 7 ein hakenartig ausgebildetes Rastelement 9 auf, dessen Rastkontur formkomplementär zu der das zweite Rastelement bildenden Ausnehmung 5 am Gehäuseelement 1 ausgebildet ist.

Um das hakenartige Rastelement 9 des Betätigungselements 7 in Eingriff mit dem durchbruchartigen Rastelement 5 des Gehäuseelements 1 zu bringen, muss das hakenartige Rastelement 9 zunächst aus seiner Ruhestellung nach radial außen bewegt werden, um den durchgehenden zylindrischen Bereich des Schafts 2 am Gehäuseelement 1 zu überwinden. Hierzu ist der zylindrische Ansatz 2 des Gehäuseelements 1 mit der Einführschräge 6 versehen. Durch geeignete Gestaltung der Einführschräge sowie der Rampe des hakenartigen Rastelements 9 kann erreicht werden, dass sich das Betätigungselement 7 nur in einer einzigen, korrekten Winkelstellung auf das Gehäuseelement 1 aufschieben lässt, wodurch Montage- oder Justierfehler beim Zusammenbau des Drehgriffschalters vermieden werden.

Mittels geeigneter Wahl der Größe der jeweiligen Kreissegmentwinkel α, β des durchbruchartigen Rastelements 5 bzw. des hakenartigen Rastelements 9 kann die aus durchbruchartigem Rastelement 5 und hakenartigem Rastelement 9 bestehende Schnappeinrichtung des Drehgriffschalters zusätzlich die Aufgabe der Drehwinkelbegrenzung für das Betätigungselement 7 erfüllen. Eine Drehwinkelbegrenzung ist insbesondere notwendig, um das Überschalten zu vermeiden, das zum Abspringen der Fahrradkette oder zu Beschädigungen im Schaltmechanismus des Nabengetriebes führen könnte. Die Begrenzung des Drehwinkels für das Betätigungselement 7 des Drehgriffschalters lässt sich bei der dargestellten Ausführungsform des Drehgriffschalters in einfacher und gleichzeitig wirkungsvoller Art und Weise dadurch erzielen, dass die Kreissegmentwinkel α bzw. β des durchbruchartigen Rastelements 5 bzw. des hakenartigen Rastelements 9 so gewählt werden, dass ihre Differenz dem gewünschten maximalen Drehwinkel des Betätigungselements 7 entspricht.

Fig. 3 zeigt den aus Gehäuseelement 1 und Betätigungselement 7 zusammengesetzten Drehgriffschalter im schematischen Axialschnitt. Man erkennt deutlich, auf welche Weise der zylinderförmige Innenbereich 8 des Betätigungselements 7 zusammen mit dem ebenfalls zylinderförmigen Schaftbereich 2 des Gehäuseelements 1 eine drehbewegliche Gleitlagerung zwischen Gehäuseelement 1 und Betätigungselement 7 bildet. Ferner geht aus der Darstellung gemäß Fig. 3 hervor, auf welche Weise der Eingriff des hakenartigen Rastelements 9 in das durchbruchartige Rastelement 5 die Festlegung des Betätigungselements 7 relativ zum Gehäuseelement 1 in axialer Richtung bewirkt.

Die dergestalt im Innenbereich sowie in unmittelbarer Nähe des Innenradius des Drehgriffschalters gebildete Schnappeinrichtung 5, 9 ist insbesondere auch dahingehend vorteilhaft, dass sie sich nur dann lösen lässt, wenn der Drehgriffschalter nicht auf dem Fahrradlenker montiert ist, da das hakenartige Rastelement 9 nur im nicht montierten Zustand des Drehgriffschalters zugänglich ist. Dies führt zu weiterer Verbesserung der Sicherheitseigenschaften des Drehgriffschalters.

### Bezugszeichenliste

- 1.: Gehäuseelement
- 2.: zylindrischer Schaftbereich
- 3.: Gehäusedeckelbereich
- 4.: Seilzugaufnahme
- 5.: durchbruchartiges Rastelement
- 6.: Einführschräge
- 7.: Betätigungselement
- 8.: zylinderförmiger Innenbereich
- 9.: hakenartiges Rastelement
- α: Kreissegmentwinkel
- β: Kreissegmentwinkel

## Patentansprüche

1. Drehgriffschalter zur ringartig ein Lenkerrohr umgreifenden Anordnung an einem Fahrradlenker, aufweisend ein am Lenkerrohr festlegbares Gehäuseelement (1) sowie ein um die Lenkerrohrachse winkelbegrenzt drehbares und am Gehäuseelement (1) mittels einer radialsymmetrische Rastelemente (5, 9) umfassenden Schnappeinrichtung axial festlegbares Betätigungselement (7), wobei ein erstes Rastelement (5) am Gehäuseelement angeordnet ist,
**dadurch gekennzeichnet,**
d**ass** ein zweites, zum ersten Rastelement (5) formkomplementär ausgebildetes Rastelement (9) unmittelbar am Betätigungselement (7) angeordnet ist.

2. Drehgriffschalter nach Anspruch 1,
**dadurch gekennzeichnet,**
**dass** erstes und zweites Rastelement (5, 9) auf einem lenkernahen Radius angeordnet sind.

3. Drehgriffschalter nach Anspruch 1 oder 2,
**dadurch gekennzeichnet,**
**dass** das zweite Rastelement (9) eine im Radialschnitt im wesentlichen hakenartig ausgebildete Kontur aufweist, wobei das erste Rastelement (5) im Radialschnitt eine zum hakenartigen Rastelement (9) formkomplementäre Hinterschneidung bildet.

4. Drehgriffschalter nach einem der Ansprüche 1 bis 3,
**dadurch gekennzeichnet,**
**dass** erstes und zweites Rastelement (5, 9) sich in Umfangsrichtung entlang zweier Kreissegmente (α, β) erstrecken, wobei die Segmentwinkel (α, β) der Kreissegmente unterschiedlich groß sind.

5. Drehgriffschalter nach Anspruch 4,
**dadurch gekennzeichnet,**
**dass** die Differenz der Kreissegmentwinkel (α, β) der Rastelemente (5, 9) dem Gesamtdrehwinkel des Betätigungselements (7) entspricht.

6. Drehgriffschalter nach einem der Ansprüche 3 bis 5,
**dadurch gekennzeichnet,**
**dass** das zweite Rastelement (9) am Betätigungselement (7) angeordnet ist.

7. Drehgriffschalter nach einem der Ansprüche 3 bis 6,
**dadurch gekennzeichnet,**
**dass** der Drehgriffschalter eine zum zweiten Rastelement (9) formkomplementäre Einführschräge (6) aufweist, wobei die Einführschräge (6) sich in Umfangsrichtung entlang eines Kreissegments erstreckt, dessen Segmentwinkel dem Segmentwinkel des zweiten Rastelements (9) entspricht.

8. Drehgriffschalter nach einem der Ansprüche 3 bis 7,
**dadurch gekennzeichnet,**
**dass** das zweite Rastelement (9) durch ein separat montierbares Element, insbesondere durch eine Schraube oder durch einen Stift gebildet wird.

## Claims

1. Twist-grip shift mechanism for arranging on a bicycle handlebar in a manner engaging annularly around a handlebar tube, having a housing element (1) which can be fixed on the handlebar tube, and having an actuating element (7), which can be rotated to a limited angular extent about the handlebar tube axis and can be fixed axially on the housing element (1) by means of a snap-on device comprising radially symmetrical latching elements (5, 9), a first latching element (5) being arranged on the housing element, **characterized in that** a second latching element (9), which is designed with a complementary shape to the first latching element (5), is arranged directly on the actuating element (7).

2. Twist-grip shift mechanism according to Claim 1, **characterized in that** the first and second latching elements (5, 9) are arranged on a radius in the vicinity of the handlebar.

3. Twist-grip shift mechanism according to Claim 1 or 2, **characterized in that** the second latching element (9) has a contour which is designed essentially in a hook-like manner in the radial section, the first latching element (5) in the radial section forming an undercut which is complementary in shape to the hook-like latching element (9).

4. Twist-grip shift mechanism according to one of Claims 1 to 3, **characterized in that** the first and second latching elements (5, 9) extend along two circular segments (α, β) in the circumferential direction, the segment angles (α, β) of the circular segments differing in size.

5. Twist-grip shift mechanism according to Claim 4, **characterized in that** the difference between the circular segment angles (α, β) of the latching elements (5, 9) corresponds to the entire angle of rotation of the actuating element (7).

6. Twist-grip shift mechanism according to one of Claims 3 to 5, **characterized in that** the second latching element (9) is arranged on the actuating element (7).

7. Twist-grip shift mechanism according to one of Claims 3 to 6, **characterized in that** the twist-grip shift mechanism has an introductory slope (6) which is complementary in shape to the second latching element (9), the introductory slope (6) extending in the circumferential direction along a circular segment, the segment angle of which corresponds to the segment angle of the second latching element (9).

8. Twist-grip shift mechanism according to one of Claims 3 to 7, **characterized in that** the second latching element (9) is formed by an element which can be fitted separately, in particular by a screw or by a pin.

## Revendications

1. Dispositif de changement de rapport par poignée rotative agencé en anneau autour d'un tube de guidon de bicyclette, qui présente un élément (1) de boîtier qui peut être fixé sur le tube de guidon et un élément d'actionnement (7) qui peut tourner sur un angle limité autour de l'axe du tube de guidon et qui peut être fixé axialement sur l'élément (1) de boîtier au moyen d'un dispositif d'encliquetage qui contient des éléments d'encliquetage (5, 9) radialement symétriques, un premier élément d'encliquetage (5) étant agencé sur l'élément de boîtier, **caractérisé en ce qu'**un deuxième élément d'encliquetage (9) dont la forme est complémentaire de celle du premier élément d'encliquetage (5) est agencé directement sur l'élément d'encliquetage (7).

2. Dispositif de changement de rapport par poignée rotative selon la revendication 1, **caractérisé en ce que** le premier élément d'encliquetage et le deuxième élément d'encliquetage (5, 9) sont agencés sur un rayon proche de celui du guidon.

3. Dispositif de changement de rapport par poignée rotative selon les revendications 1 ou 2, **caractérisé en ce qu'**en coupe radiale, le deuxième élément d'encliquetage (9) présente un contour configuré essentiellement en forme de crochet, le premier élément d'encliquetage (5) formant, en coupe radiale, une contre-dépouille dont la forme est complémentaire de celle de l'élément d'encliquetage (9) en forme de crochet.

4. Dispositif de changement de rapport par poignée rotative selon les revendications 1 à 3, **caractérisé en ce que** le premier élément d'encliquetage et le deuxième élément d'encliquetage (5, 9) s'étendent à la périphérie sur deux arcs de cercle (α, β), les angles des arcs (α, β) étant différents.

5. Dispositif de changement de rapport par poignée rotative selon la revendication 4, **caractérisé en ce que** la différence entre les angles des arcs de cercle (α, β) des éléments d'encliquetage (5, 9) correspond à la totalité de l'angle de rotation de l'élément d'actionnement (7).

6. Dispositif de changement de rapport par poignée rotative selon les revendications 3 à 5, **caractérisé en ce que** le deuxième élément d'encliquetage (9) est agencé sur l'élément d'actionnement (7).

7. Dispositif de changement de rapport par poignée rotative selon les revendications 3 à 6, **caractérisé en ce qu'**il présente un biseau d'introduction (6) dont la forme est complémentaire de celle du deuxième élément d'encliquetage (9), le biseau d'introduction (6) s'étendant à la périphérie sur un arc de cercle dont l'angle correspond à celui du deuxième élément d'encliquetage (9).

8. Dispositif de changement de rapport par poignée rotative selon les revendications 3 à 7, **caractérisé en ce que** le deuxième élément d'encliquetage (9) est formé par un élément qui peut être monté séparément et en particulier par une vis, par un boulon ou par une cheville.
